(19) Europäisches Patentamt

European Patent Office

Office européen des brevets

(11) Veröffentlichungsnummer : **0 078 964**
**B1**

(12) **EUROPÄISCHE PATENTSCHRIFT**

(45) Veröffentlichungstag der Patentschrift :
26.03.86

(21) Anmeldenummer : **82109821.7**

(22) Anmeldetag : **25.10.82**

(51) Int. Cl.⁴ : **A 01 G 9/24**, A 01 G 9/18

(54) **Verfahren zum Betrieb eines Gewächshauses und Gewächshaus zum Durchführen des Verfahrens.**

(30) Priorität : **26.10.81 DE 3142357**
**28.05.82 DE 3220254**
**15.07.82 DE 3226499**
**16.08.82 DE 3230439**

(43) Veröffentlichungstag der Anmeldung :
**18.05.83 Patentblatt 83/20**

(45) Bekanntmachung des Hinweises auf die Patenterteilung : **26.03.86 Patentblatt 86/13**

(84) Benannte Vertragsstaaten :
**AT BE CH FR GB IT LI NL**

(56) Entgegenhaltungen :
**AT-B-    254 594**
**CH-A-   571 804**
**DE-A- 2 914 607**
**DE-B- 1 949 001**
**FR-A- 2 272 594**

(73) Patentinhaber : **Technica Entwicklungsgesellschaft mbH & Co. KG**
**Robert-Bosch-Strasse 4-6**
**D-2418 Ratzeburg (DE)**

(72) Erfinder : **Kückens, Alexander**
**Bredenland**
**D-2401 Gross Sarau (DE)**

(74) Vertreter : **Fricke, Joachim, Dr. et al**
**Dr. R. Döring, Dr. J. Fricke, Patentanwälte Josephspi-talstrasse 7**
**D-8000 München 2 (DE)**

EP 0 078 964 B1

Jouve, 18, rue St-Denis, 75001 Paris, France

## Beschreibung

Die Erfindung betrifft ein Verfahren zum Betrieb eines Gewächshauses sowie ein Gewächshaus zum Durchführen dieses Verfahrens.

Gewächshäuser sind hohe Energieverbraucher. Es sind bereits zahlreiche Vorschläge gemacht worden, um den Energiebedarf bei Gewächshäusern zu verringern und/oder die erforderliche Energie teilweise oder ganz aus natürlichen Energiequellen, wie Sonnenenergie oder Grundwasser oder dgl., zu gewinnen (vgl. deutsches Gebrauchsmuster 81 17 659). Auch ist man zum Teil gezwungen, Gewächshäuser nur saisonweise zu betreiben, insb. bei der Aufzucht von Spezialkulturen. Bei alledem verbleibt die Tatsache, daß nur ein Bruchteil der aufzuwendenden Energie für die Pflanzen selbst und deren Wachstum ausgenutzt werden kann. Der weitaus größte Teil der aufzubringenden Energie geht dagegen ungenutzt verloren, sei es durch den Boden des Gewächshauses, sei es durch die Gewächshauswände und -dächer.

Zur Energieeinsparung ist es aus der DE-A-2 914 607 bekannt, innerhalb eines Gewächshauses einzelne Kulturbereiche in Form von Kulturtischen zum Untergrund hin und zum Inneren des Gewächshauses hin räumlich und wärmemäßig isoliert aufzustellen. Dazu besteht der einzelne Kulturtisch aus einer Außenschale, die nach unten mit Styropor abisoliert und mit Rohrleitungen beheizt ist, die ihrerseits durch eine Innenschale abgedeckt werden, welche den Kulturboden und die Pflanzen aufnimmt. Über das ganze wird eine lichtdurchlässige Thermofolie gelegt, die sich ihrer Höhe nach zur Anpassung an die Wuchshöhe der Pflanzen verstellen läßt. Zur Befestigung der Thermofolie dient ein aus Rohrleitungen gebildetes Gestänge, über das die Pflanzen zugleich bewässert werden können. Die Bewässerung erfolgt unter der Steuerung eines Hydrostaten, während die Wärmezufuhr durch einen Thermostaten gesteuert wird. Dadurch läßt sich für jede Pflanze die richtige Klimazone schaffen.

Die Möglichkeit in Gartenbaubetrieben mit kohlendioxydhaltigen Gasen Kulturen zu düngen, ist aus der Gartenbaupraxis bereits mindestens seit 1920 bekannt, wobei sich die $CO_2$-Düngung besonders in lichtarmen Zonen oder Jahreszeiten günstig auswirkt (vgl. DE-Zeitschrift « Umschau » 1951, Heft 1, Seite 21/22). Dabei wurden hauptsächlich, ggf. gereinigte Abgase aus Heiz- oder Industrieprozessen in die Atmosphäre üblicher Gewächshäuser eingeleitet. Es ist aber auch bekannt zu diesem Zweck Abgase aus Bio-Reaktoren auszunutzen (vgl. CH-A-571 804). Der natürliche Gehalt an Kohlendioxydgas in der Umgebungsluft liegt bei etwa 300 ppm. Eine zur Wachstumsförderung wirksame erhöhte Konzentration an Kohlendioxydgas liegt etwa im Bereich zwischen 500 und 1 000 ppm.

Die Schadstoffe in Abgasen beeinträchtigen die Gesundheit von Pflanzen. Die Reinigung der Abgase, bevor diese in das Gewächshaus eingeleitet werden, bedingt einen hohen Aufwand. Die Verwendung von reinem Kohlendioxydgas ist, weil dieses Gas sehr teuer und die Verluste bei Verwendung in einem Gewächshaus hoch sind, ökonomisch in aller Regel nicht vertretbar.

Die Praxis hat weiterhin gezeigt, daß beim Einsatz von wärmeisolierten Kulturbereichen innerhalb eines Gewächshauses erhebliche Probleme auftreten, und zwar einerseits durch den hohen Lichtverlust von bis zu 30 % bei sogenannten Thermofolien und zum anderen durch den hohen Schädlingsbefall wegen zu hoher Luftfeuchtigkeit. Grobe Schätzungen gehen dahin, daß etwa 1 % Lichtverlust zu etwa 1 % Ernteverlust bei Kulturpflanzen führen.

Es ist Aufgabe der Erfindung ein Verfahren mit den Merkmalen des Oberbegriffs des Anspruchs 1 so weiterzubilden, daß die aufgezeigten Probleme, wie Ernteverlust durch Schädlingsbefall auf besonders kostengünstige und für die Pflanzen und für die Umgebung schonende Weise vermieden werden und ein Gewächshaus mit den Merkmalen des Oberbegriffs des Anspruchs 9 anzugeben, welches sich besonders günstig für die Ausführung des Verfahrens eignet.

Diese Aufgabe wird durch die Merkmale des kennzeichnenden Teils des Anspruchs 1 bzw. durch die Merkmale des kennzeichnenden Teils des Anspruchs 9 gelöst.

Durch die Isolierung der einzelnen Kulturbereiche auch gegen einen Gasaustausch mit der umgebenden Gewächshausatmosphäre läßt sich erstmals in ökonomisch vertretbarer Weise reines Kohlendioxyd aus Gasflaschen einsetzen. Durch die Verwendung von reinem Kohlendioxydgas läßt sich der Anteil des $CO_2$ in der Atmosphäre des isolierten Kulturbereiches wesentlich genauer als etwa bei Verwendung von gereinigten Abgasen steuern. Durch die Isolierung der Kulturbereiche gegen Gasaustausch wird es auch erstmals möglich den $CO_2$-Gehalt der Luft in dem isolierten Kulturbereich stoßartig so weit gegenüber dem für die $CO_2$-Düngung der Kulturen notwendigen Wert hinauszusteigern, daß alle Sauerstoff verbrauchenden Schädlinge abgetötet werden. Auf diese Weise läßt sich der Schädlingsbefall ohne den Einsatz üblicher chemischer Schädlingsbekämpfungsmittel in den Kulturbereichen trotz hoher Luftfeuchtigkeit zuverlässig vermeiden. Auch der Pilzbefall der Pflanzen wird auf diese Weise wesentlich eingeschränkt. Im übrigen wird in der Atmosphäre des abgegrenzten Kulturbereiches eine $CO_2$-Konzentration aufrechterhalten, die für das Wachstum der Pflanzen günstig ist.

Durch das neue Verfahren wird jede Einbuße an Lichtausbeute innerhalb des Kulturbereiches, wie sie durch die haubenartige Abdeckung des Kulturbereiches bedingt ist, mehr als kompensiert, da das Wachstum der Kulturen durch

die erhöhte $CO_2$-Konzentration in der isolierten Atmosphäre des Kulturbeetes in besonders erhöhtem Maße angeregt wird. Gleichzeitig wird damit auch der negative Einfluß der hohen Luftfeuchtigkeit durch den erhöhten $CO_2$-Gehalt ausgeschaltet.

Für die Schädlingsbekämpfung reicht es aus, wenn die Volumenkonzentration des $CO_2$ in der Atmosphäre des isolierten Kulturbereiches stoßartig und für begrenzte Zeit um das 10- bis 100-fache gegenüber der maximal erhöhten Konzentration gesteigert wird, wie sie für die Düngung der Pflanzen mit Kohlendioxyd zweckmäßig ist. Eine Volumenkonzentration von 1,5 Vol.% bis 15 Vol.% hat sich dabei als besonders zweckmäßig erwiesen.

Von besonderem Vorteil ist es, wenn im übrigen das reine Kohlendioxyd zu Düngezwecken dem isolierten Kulturbereich mit Hilfe von kohlendioxydimprägniertem Gießwasser zugeführt wird. Hierdurch läßt sich die Kohlendioxydkonzentration sehr genau steuern und das reine $CO_2$ gezielt und damit ökonomisch einsetzen.

Von besonderer Bedeutung ist es dabei, daß man das kohlendioxydimprägnierte Wasser gezielt dazu einsetzen kann, um den pH-Wert des Kulturbodens zu beeinflussen. Dabei wird gezielt davon Gebrauch gemacht, daß beim Imprägnieren von Wasser mit Kohlendioxyd ein vorbestimmter Anteil des Kohlendioxyds mit Wasser zu chemisch gebundener $H_2CO_3$ reagiert, wobei das Verhältnis zwischen in dem Wasser physikalisch gebundenem $CO_2$-Gas und chemisch gebundener Kohlensäure bei 1 000-1 im wesentlichen konstant bleibt. Durch den Grad der Imprägnierung kann damit auch der chemisch gebundene Anteil des $CO_2$ im Wasser genau eingestellt werden. Durch die Einstellung des pH-Wertes des Kulturbodens mit Hilfe des kohlendioxydimprägnierten Gießwassers wird nicht nur die Einbringung großer Mengen an Torf in den Kulturboden überflüssig. Vielmehr hat sich auch gezeigt, daß die Steigerung des chemisch gebundenen Anteils an $CO_2$ im Kulturboden einen augenfälligen günstigen Einfluß auf das Wachstum der Pflanzen und auf deren Widerstandskraft gegenüber Pflanzenschädlingen hat, und zwar im Unterschied zu den sonst üblichen Mitteln, die man zur Beeinflussung des pH-Wertes von Kulturböden einsetzt.

Es kommt daher auch wesentlich auf eine für einen Gartenbaubetrieb wirtschaftlich einsetzbare Methode zur Feinimprägnierung des Wassers mit $CO_2$ an. Verfahren, die gerade für den Gartenbaubetrieb zu diesem Zweck geeignet sind, ergeben sich aus den Ansprüchen 5 bis 7.

Da die Pflanzen über die insb. an der Unterseite der Blätter befindlichen Spaltöffnungen (Stomata) das $CO_2$-Gas aus der Atmosphäre der isolierten Kulturbereiche aufnehmen und der Öffnungsgrad dieser Spaltöffnungen u. a. von dem Ausmaß der Luftfeuchtigkeit abhängt, ist es wesentlich, daß aufgrund der verringerten Gefahr eines Schädlingsbefalls mit höherer Luftfeuchtigkeit als in Gewächshäusern sonst üblich gearbeitet werden kann. Bei hoher Luftfeuchtigkeit sind die Spaltöffnungen weit geöffnet und können somit optimal das Gas aufnehmen. Gleichzeitig läßt sich durch Steuerung der Luftfeuchtigkeit auch die Aufnahmefähigkeit der Pflanzen für $CO_2$ aus der Atmosphäre des isolierten Kulturbereiches beeinflussen. Eine Steuerung der Luftfeuchtigkeit erfolgt einerseits durch die Zuführung von mit $CO_2$ imprägniertem Gießwasser und andererseits durch die Maßnahme des Anspruchs 8.

Zum Durchführen des Verfahrens wird von einem Gewächshaus mit den Merkmalen des Oberbegriffs des Anspruchs 9 ausgegangen. Dieses wird durch die Merkmale des Gesamtanspruches 9 weitergebildet. Durch diese Weiterbildung wird eine Isolierung des Kulturbereiches auch gegen Gasaustausch mit der umgebenden Gewächshausatmosphäre auf einfache und die üblichen Arbeiten am Kulturbeet nicht beeinträchtigende Weise erreicht, wobei gleichzeitig für die Zufuhr von $CO_2$-Gas bzw. von CO-imprägniertem Wasser Sorge getragen ist.

Durch die Maßnahme nach Anspruch 10 wird die Beeinflussung der Luftfeuchtigkeit innerhalb der isolierten Kulturbereiche auf einfache und genaue Weise sichergestellt und damit auch die $CO_2$-Aufnahmefähigkeit der Pflanzen.

Die Maßnahmen nach Anspruch 11 bieten eine weitere Möglichkeit die isolierten Kulturbereiche, insb. bei Nacht, gegen Wärmeverluste zur Gewächshausatmosphäre hin zu schützen und so den Energiebedarf klein zu halten. Dem gleichen Zweck dient auch die Maßnahme des Anspruchs 12. Der Anspruch 12 stellt sicher, daß die Mobilität der einzelnen Kulturbereiche gewährleistet ist ohne Beeinträchtigung der Versorgung dieser Kulturbereiche aus den einzelnen Versorgungseinrichtungen.

Das zur Entfeuchtung dienende Umluftsystem umfaßt eine Fördereinrichtung für die Umluft sowie einen gekühlten Kondensator zum Auskondensieren von überschüssiger Feuchtigkeit und einen Wärmetauscher zum Wiederanwärmen der durch Auskondensieren getrockneten Luft. Diese einzelnen Einrichtungen können in dem Umluftsystem in Reihe angeordnet sein.

Die Erfindung wird nachfolgend anhand schematischer Zeichnungen an einem Ausführungsbeispiel näher erläutert.

Es zeigen :

Figur 1 in perspektivischer Ansicht ein Gewächshaus, das gemäß der Erfindung weitergebildet ist, wobei Teile des nur schematisch angedeuteten Gewächshauses weggebrochen dargestellt sind, um den Einblick in das Gewächshaus zu ermöglichen und

Figur 2 einen Querschnitt durch einen einzelnen isolierten Kulturbereich innerhalb des Gewächshauses.

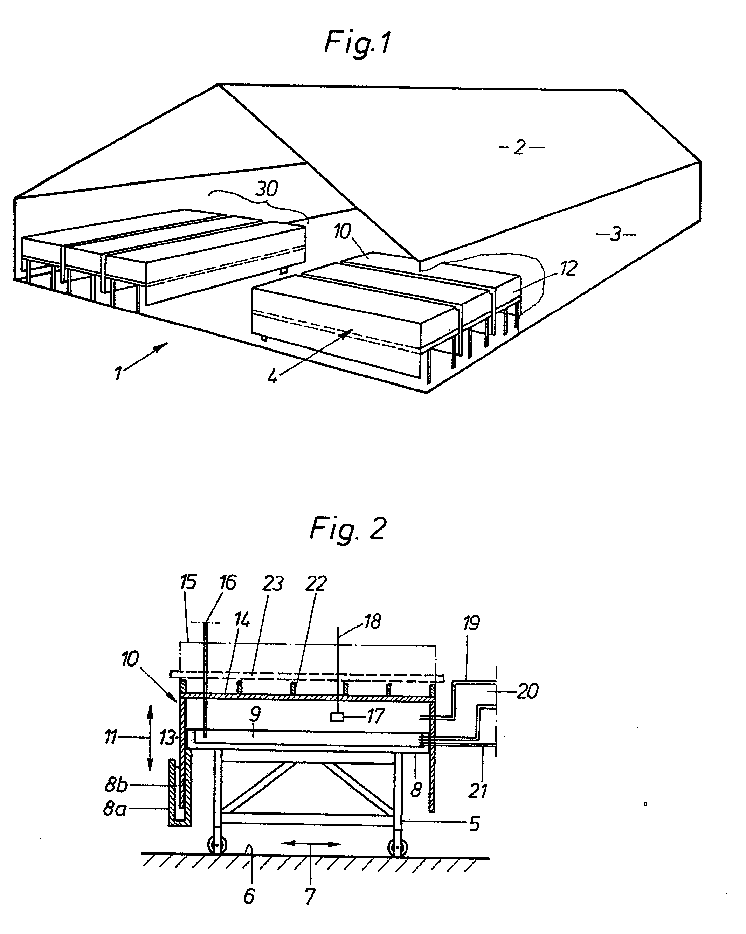

Das Gewächshaus 1 in Fig. 1 kann von üblicher Konstruktion sein, d. h. in Rahmenbauweise hergestellt und einfach verglast sein. Es kann sich dabei auch um ein altes Gewächshaus handeln, das gemäß der Erfindung umgerüstet ist.

In dem Gewächshaus sind einzelne Kulturbereiche gegenüber anderen Kulturbereichen und gegenüber dem Inneren des Gewächshauses ebenso wie gegenüber dem Erdboden getrennt und isoliert und zwar sowohl räumlich, als auch wärmemäßig. Im dargestellten Beispiel sind zwei Gruppen von solchen isolierten Kulturbereichen wiedergegeben, von denen die eine Gruppe quer zur Längsrichtung des aus den Seitenwänden 3 und der Dachfläche 2 bestehenden Gewächshauses und die andere Gruppe in Längsrichtung orientiert ist. Die einzelnen Kulturbereiche sind mit 4 bezeichnet.

Gemäß Fig. 2 besteht jeder Kulturbereich aus einer wärmeisolierten Bodenwanne 8, die in ihrem Inneren 9 die Kulturerde aufnimmt. Die Bodenwannen können selbstverständlich auch direkt auf dem Boden des Gewächshauses angeordnet oder in diesen eingelassen sein. In die Bodenwanne kann auch eine isolierte Heizeinrichtung eingebettet sein. Zur einfachen Bedienung und Betreuung der einzelnen Kulturbereiche sind die einzelnen Bodenwannen 8 z. B. auf Wägen 5 auf dem Boden 6 entsprechend dem Pfeil 7 hin und herfahrbar, so daß sie, wie in Fig. 1 dargestellt, zu engen Blöcken zusammengeschoben, zur Überwachung oder Bedienung auch auseinandergerückt werden können. Das gleiche gilt analog auch für fest installierte Tische mit begrenzt rollbaren Tischoberteilen.

Im dargestellten Beispiel weist jede Bodenwanne eine Schürze 8a auf, die U-förmig im Querschnitt ausgebildet und nach oben offen ist und mit einer Wasserfüllung 8b versehen werden kann. In Fig. 2 ist diese Schürze nur auf der einen Seite der Bodenwanne angedeutet. Sie befindet sich jedoch auf beiden Seiten der Bodenwanne. Die schmalen oder Stirnseiten der Bodenwanne sind zweckmäßigerweise mit festen Stirnseitenteilen 12 versehen. Zu den Längsseiten hin und nach oben ist der Kulturbereich im dargestellten Beispiel durch eine U-förmige Haube 10 abgedeckt, deren Seitenteile 13 die Seiten der Bodenwanne 8 teleskopartig übergreifen und in die Wasserfüllung der Schürze 8a der Bodenwanne eingreifen, um so eine einfache Abdichtung zu ermöglichen. Durch nicht dargestellte Seilzüge oder dgl. kann die Bodenwanne, wie bei 15 angedeutet ist, abgesenkt und angehoben werden, um so das Innenvolumen des abgegrenzten Kulturbereiches an die Wuchshöhe der Pflanzen anzupassen und so auf einen möglichst kleinen Wert zu begrenzen. Die Heb- und Senkbarkeit der Hauben 10 ist durch den Doppelpfeil 11 angedeutet. Die Stirnwände können die Haube entsprechend überragen, so daß die Haube in jeder Höhenlage abdichtend innen an den Stirnwänden anliegt. Falls erforderlich, können entsprechende Gleitdichtungen zwischen den Teilen vorgesehen sein. Die Stirnwände und die Haube sind aus doppelschaligem durchsichtigen Material ausgebildet und bilden so eine raummäßige und wärmemäßige Isolierung gegenüber dem Inneren des Gewächshauses. Jeder einzelne Kulturbereich ist über flexible Schläuche oder Leitungen mit einer Heizeinrichtung verbunden, die z. B. bei 16 angeschlossen werden kann, mit einer Leitung 19, durch die $CO_2$-Gas eingeleitet werden kann, mit einer Leitung 20, mittels der mit $CO_2$ imprägniertes Gießwasser eingeführt werden kann, sowie mit einer Leitung 21, durch die Gießwasser oder Nährstofflösung den Kulturbereichen zugeführt werden kann. Die $CO_2$-Düngung erfolgt mit dem Gießwasser über die Leitung 20, während die stoßartige Zuführung von hohen $CO_2$-Anteilen über die Gasleitung 19 erfolgt.

Die Feuchtigkeit wird zweckmäßigerweise für jeden einzelnen Kulturbereich über einen Kompaktentfeuchter 17 vorgenommen, der durch Auskondensieren überschüssiger Feuchtigkeit zugleich auch zur Gießwassergewinnung beiträgt. Über die Leitung 18 kann die Entfeuchtungseinrichtung 17 mit einem Umluftsystem verbunden sein.

Jedem Kulturbereich kann eine, z. B. auf Leisten 22 der Haube abgestützte Jalousie 23 zugeordnet sein, die tagsüber normalerweise offen ist, um einen unbehinderten Lichteinfall zu ermöglichen. Nachts lassen sich die Kulturen in der in Fig. 1 gezeigten Weise blockartig zusammenschieben, so daß die jalousieartigen Abdeckungen 23, die dann geschlossen sind, sich gegenseitig überlappen und so einen zusätzlichen Wärmeschutz für die Kulturen gegenüber dem Inneren des Gewächshauses ergeben.

Einer der Blöcke in Fig. 1 ist mit 30 bezeichnet.

Die Pflanzen nehmen das $CO_2$ vorwiegend über an der Blattunterseite vorhandene Spaltöffnungen auf. Deren Aufnahmefähigkeit ist u. a. auch stark abhängig von der Luftfeuchtigkeit. Die Schließfähigkeit der Spaltöffnungen wird u. a. durch den Wassergehalt der Pflanze und die umgebende Luftfeuchte bestimmt. Je trockner die Luft und die Pflanze, umso weniger Wasser enthalten die Schließzellen und umso mehr schließen sich die Spaltöffnungen. Durch Steuerung der Luftfeuchte in der beschriebenen Weise kann man so zusätzlich Einfluß auf die $CO_2$-Aufnahme der Pflanzen nehmen.

Mit der neuen Anordnung wird es — im Gegensatz zu den bisherigen Gewächshäusern — möglich, die verschiedensten Kulturen mit sehr unterschiedlichen Klimabedürfnissen in ein und demselben Gewächshaus anzubauen.

Der Wassergehalt der Pflanzen läßt nur 2 % für den Zellaufbau und 98 % für die Verdunstung zu. Mit dem System zur Regelung der Luftfeuchte können diese 98 % Verdunstungsfeuchtigkeit praktisch restlos wiedergewonnen werden, was auch und besonders für wasserarme Gebiete erheblichen Nutzen bringt.

**Patentansprüche**

1. Verfahren zum Betrieb eines Gewächshauses, bei dem man einzelne Kulturbereiche innerhalb des Gewächshauses zum Untergrund hin und zum Inneren des Gewächshauses hin räumlich und wärmemäßig isoliert und nur den isolierten Bereichen gezielt Wärme und Feuchtigkeit zuführt, dadurch gekennzeichnet, daß die einzelnen Kulturbereiche gegen einen Gasaustausch mit der umgebenden Gewächshausatmosphäre isoliert werden, und daß einem isolierten Kulturbereich jeweils für begrenzte Zeit reines Kohlendioxydgas stoßartig in einer zur Vernichtung von Sauerstoff verbrauchenden Schädlingen ausreichenden Menge und im übrigen reines Kohlendioxyd in solchen Mengen zugeführt wird, daß eine zur Düngung der Pflanzen ausreichende, gegenüber der normalen Konzentration in der Luft erhöhte $CO_2$-Konzentration in der Atmosphäre des isolierten Kulturbereiches aufrechterhalten wird.

2. Verfahren nach Anspruch 1, dadurch gekennzeichnet, daß dem isolierten Kulturbereich Kohlendioxyd in Gasform jeweils für begrenzte Zeit bis zu einem Anteil in der Luft des isolierten Kulturbereiches von 1,5 Vol.% bis 15 Vol.% zugeführt wird.

3. Verfahren nach Anspruch 1, dadurch gekennzeichnet, daß dem isolierten Kulturbereich das reine $CO_2$ zu Düngezwecken mit Hilfe von kohlendioxyd-imprägniertem Gießwasser zugeführt wird.

4. Verfahren nach Anspruch 3, dadurch gekennzeichnet, daß mit Hilfe des kohlendioxydimprägnierten Gießwassers der pH-Wert des Kulturbodens beeinflußt wird.

5. Verfahren nach Anspruch 3 oder 4, dadurch gekennzeichnet, daß Kohlendioxyd und Gießwasser jeweils in einer Druckgasflasche oder einem Druckgastank unter dem Druck in der Kohlendioxydflasche oder dgl. in Vorrat gehalten und unter Aufrechterhaltung des Druckes des Gießwasser mit dem Gas imprägniert wird, worauf das imprägnierte Wasser nach Druckentspannung dem isolierten Kulturbereich zugeführt wird.

6. Verfahren nach Anspruch 5, dadurch gekennzeichnet, daß das imprägnierte Wasser mit Hilfe des Druckes aus dem Kohlendioxydtank oder dgl. gefördert und verriegelt oder verregnet wird.

7. Verfahren nach einem der Ansprüche 3 oder 4, dadurch gekennzeichnet, daß Kohlendioxyd enthaltende Abgase in einem Druckbehälter gesammelt und mittels Kohlendioxydgas aus einer Druckgasflasche oder einem Druckgastank auf Imprägnierungsdruck hochgespannt und dem Wasservorrat zugeleitet werden.

8. Verfahren nach einem der Ansprüche 1 bis 7, dadurch gekennzeichnet, daß man in den isolierten Kulturbereichen übermäßige Feuchtigkeit mit Hilfe von Umluft abführt, wobei die aus den isolierten Kulturbereichen abgeführte Luft zunächst durch Auskondensieren der Feuchtigkeit an kalten oder gekühlten Flächen getrocknet und vor Rückführung in die isolierten Kulturbereiche erwärmt wird.

9. Gewächshaus zum Durchführen des Verfahrens nach Anspruch 1, mit mehreren innerhalb des Gewächshauses (1) angeordneten einzelnen Kulturbereichen (4), die jeder zum Untergrund hin und zum Inneren des Gewächshauses hin räumlich und wärmemäßig isoliert sind, wobei jeder Kulturbereich eine den Kulturboden aufnehmende wannenförmige Isolierung (8) und eine haubenartige Abdeckung (10) aus lichtdurchlässigem, wärmeisolierenden Material aufweist, und mit einer Versorgungseinrichtung für die Zufuhr von Wärme und Gießwasser über Leitungen (19-21) verbindbar ist, dadurch gekennzeichnet, daß die haubenartige Abdeckung (10) jedes isolierten Kulturbereiches (4) aus einer doppelschaligen Haube besteht, welche den Rand der Bodenwanne (8) übergreift und mit ihrem unteren Rand in eine der Bodenwanne (8) zugeordnete, eine Flüssigkeitsfüllung aufweisende Rinne (8a) gasdicht eingreift, und daß jeder isolierte Kulturbereich (4) mit Versorgungseinrichtungen für die Zufuhr von reinem $CO_2$-Gas und für mit reinem $CO_2$ imprägniertem Wasser (19, 20) verbindbar ist.

10. Gewächshaus nach Anspruch 9, dadurch gekennzeichnet, daß die isolierten Kulturbereiche (4) gruppenweise oder einzeln mit einem Umluftsystem verbunden (17, 18) sind, dem ein gekühlter Kondensator zum Auskondensieren von Feuchtigkeit und ein Wärmetauscher zum Anwärmen der getrockneten Luft in Reihe zugeordnet sind.

11. Gewächshaus nach Anspruch 9 oder 10, dadurch gekennzeichnet, daß die parallel zueinander angeordneten Kulturbereiche (4) in Richtung quer zu ihrer Längsrichtung in eine dicht zusammengeschobene Stellung zu einem Block (30) gegeneinander bewegbar sind.

12. Gewächshaus nach Anspruch 11, dadurch gekennzeichnet, daß jedem Kulturbereiche (4) eine horizontal zusammenziehbare oder einrollbare und über die obere Abdeckung (10) ausziehbare oder ausrollbare Schattierung (23), wie Rollo oder Jalousie, von den Kulturbereich (4) übergreifender Breite zugeordnet ist und die Schattierungen (23) bei zu einem Block (30) zusammengeschobenen Kulturbereichen (4) unter gegenseitiger Überlappung einen dichten zusätzlichen Wärmeschutz für die Kulturbereiche (4) bilden.

13. Gewächshaus nach einem der Ansprüche 11 oder 12, dadurch gekennzeichnet, daß jeder Kulturbereich über flexible Leitungsabschnitte (19-21) mit der Wärmequelle, der Quelle für Kohlendioxydgas und der Quelle für imprägniertes Gießwasser und mit einem Umluftsystem verbindbar sind.

**Claims**

1. Method of using a greenhouse, wherein individual cultivating areas within the greenhouse are spacially and thermally insulated relative to the ground and the inside of the greenhouse, and heat and moisture is supplied in a controlled manner to the insulated areas alone, characterised in that the individual cultivating areas are insulated against an exchange of gas with the surrounding atmosphere of the greenhouse, and pure carbon dioxide gas is supplied intermittently to an insulated cultivating area for a limited period of time in each case in a quantity which is sufficient to destroy oxygen-consuming pests, and furthermore pure carbon dioxide is supplied in quantities such that a $CO_2$-concentration is maintained in the atmosphere of the insulated cultivating area which is sufficient for fertilising the plants and which is higher than the normal concentration in the air.

2. Method according to claim 1, characterised in that carbon dioxide is supplied to the insulated cultivating area in gas form for a limited period of time in each case until its proportion in the air of the insulated cultivating area is between 1.5 % and 15 % by volume.

3. Method according to claim 1, characterised in that pure $CO_2$ is supplied to the insulating cultivating area for fertilisation purposes using water impregnated with carbon dioxide.

4. Method according to claim 3, characterised in that the pH value of the cultivating soil is influenced by means of the water impregnated with carbon dioxide.

5. Method according to claim 3 or 4, characterised in that carbon dioxide and water is stored in each case in a compressed gas cylinder or a compressed gas tank under the pressure in the carbon dioxide cylinder or the like, and is impregnated with the gas whilst maintaining the pressure of the water, the impregnated water then being supplied to the insulated cultivating area after the pressure has been released.

6. Method according to claim 5, characterised in that the impregnated water is supplied and cut off or sprayed by means of the pressure from the carbon dioxide tank.

7. Method according to any one of claims 3 or 4, characterised in that exhaust gas containing carbon dioxide is collected in a pressurised container and subjected to high pressure to form an impregnating pressure using carbon dioxide gas from a compressed gas cylinder or a compressed gas tank and is fed into the water supply.

8. Method according to any one of claims 1 to 7, characterised in that surplus moisture in the insulated cultivating areas is drawn off by means of circulating air, the air drawn out of the insulated cultivating areas firstly being dried by condensing out the moisture on cold or cooled surfaces, and then warmed before being returned to the insulated cultivating areas.

9. Greenhouse for carrying out the method according to claim 1, having a plurality of individual cultivating areas (4) arranged within the greenhouse (1), which are each spacially and thermally insulated relative to the ground and the inside of the greenhouse, each cultivating area comprising a trough-shaped insulation (8) for receiving the cultivating soil and a hood-like cover (10) made of light-permeable, heat insulating material, and being connectable to a supply arrangement for supplying heat and water via ducts (19 to 21), characterised in that the hood-like cover (10) of each insulating cultivating area (4) is formed by a double layer hood, which overlaps the edge of the soil trough (8) and engages in a gastight manner with its lower edge in a channel (8a) which is associated with the soil trough (8) and which is filled with fluid, and each insulated cultivating area (4) can be connected to supply arrangement (19, 20) for supplying pure $CO_2$ gas and for water impregnated with pure $CO_2$.

10. Greenhouse according to claim 9, characterised in that the insulated cultivating areas are connected in groups or individually to an air circulating system (17, 18), with which a cooled condenser for condensing out moisture and a heat exchanger for prewarming the dried air are associated in series.

11. Greenhouse according to claim 9 or 10, characterised in that cultivating areas (4) which are arranged parallel to one another can be displaced with respect to one another in the direction transverse to their longitudinal extension into a position in which they are pushed close together to form a block (30).

12. Greenhouse according to claim 11, characterised in that a shade (23) such as a roller blind or a venetian blind which can be horizontally retracted or rolled up and extended or rolled out over the upper cover (10), and which has a width extending over the cultivating area (4), is associated with each cultivating area (4), and the shades (23) provide a sealed additional form of heat insulation for the cultivating areas (4) when the cultivating areas (4) are pushed together with reciprocal overlapping to form a block (30).

13. Greenhouse according to any one of claims 11 or 12, characterised in that each cultivating area can be connected via flexible duct sections (19 to 21) to the heat source, the carbon dioxide gas source, the impregnated water source and to an air circulating system.

**Revendications**

1. Procédé pour l'exploitation d'une serre, dans lequel on isole spatialement et thermiquement, du sol sous-jacent et de l'intérieur de la serre, différentes zones de culture et on amène de la chaleur et de l'humidité, de façon dirigée, seulement aux zones isolées, caractérisé en ce que l'on isole les différentes zones de culture contre un échange de gaz avec l'atmosphère ambiante de la serre et en ce que l'on amène de façon brusque, à une zone de culture isolée, chaque fois pendant un temps limité, du dioxyde de carbone pur en quantité suffisante pour détruire les parasites consommant de l'oxygène et en ce que, par ailleurs, on amène du dioxyde de carbone pur en quantités telles qu'une concentration de $CO_2$ suffisant à la fertilisation des plantes, accrues relativement à la concentration normale dans l'air, soit entretenue dans l'atmosphère de la zone de culture isolée.

2. Procédé selon la revendication 1, caractérisé en ce que l'on amène à la zone de culture isolée, chaque fois pendant un temps limité, du dioxyde de carbone sous forme gazeuse en proportion de 1,5 à 15 % en volume dans l'air de la zone de culture isolée.

3. Procédé selon la revendication 1, caractérisé en ce que l'on amène le $CO_2$ pur à la zone de culture isolée, aux fins de fertilisation, à l'aide d'eau d'arrosage imprégnée de dioxyde de carbone.

4. Procédé selon la revendication 3, caractérisé en ce qu'à l'aide de l'eau d'arrosage imprégnée de dioxyde de carbone, on influence le pH du sol de culture.

5. Procédé selon l'une des revendications 3 et 4, caractérisé en ce que l'on garde chaque fois en réserve du dioxyde de carbone et de l'eau d'arrosage, dans une bouteille à gaz sous pression ou dans un réservoir à gaz sous pression, sous la pression régnant dans la bouteille à dioxyde de carbone ou récipient similaire, et en ce qu'en maintenant la pression, on imprègne de gaz l'eau d'arrosage, après quoi on amène l'eau imprégnée, après détente, à la zone de culture isolée.

6. Procédé selon la revendication 5, caractérisé en ce que l'on transporte et en ce que l'on déverse l'eau imprégnée à l'aide de la pression provenant du réservoir à dioxyde de carbone ou récipient similaire.

7. Procédé selon l'une des revendications 3 et 4, caractérisé en ce que l'on accumule dans un récipient à pression des gaz résiduaires contenant du dioxyde de carbone, et en ce qu'on les élève à la pression d'imprégnation au moyen de dioxyde de carbone provenant d'une bouteille de gaz sous pression, et en ce qu'on les amène à la réserve d'eau.

8. Procédé selon l'une des revendications 1 à 7, caractérisé en ce que l'on évacue l'humidité en excès, dans les zones de culture isolées, à l'aide d'air recyclé, en séchant tout d'abord l'air évacué des zones de culture isolées par condensation de l'humidité sur des surfaces froides ou refroidies et en le chauffant avant de le ramener dans les zones de culture isolées.

9. Serre pour la mise en œuvre du procédé selon la revendication 1, présentant plusieurs zones de culture individuelles (4) disposées à l'intérieur de la serre (1), qui sont isolées chacune spatialement et thermiquement du sol sous-jacent et de l'intérieur de la serre, chaque zone de culture présentant une isolation en forme de cuve (8) recevant le sol de culture et un recouvrement en forme de hotte (10) en matière calorifuge transparente et peut être reliée par des tuyaux (19 à 21) à un dispositif d'alimentation pour l'amenée de chaleur et d'eau d'arrosage, caractérisée en ce que le recouvrement en forme de hotte (10) de chaque zone de culture isolée (4) est formé d'une hotte à double paroi qui recouvre le bord de la cuve de fond (8) et s'engage par son bord inférieur, de façon étanche aux gaz, dans une gouttière (8a) présentant un remplissage de liquide, et en ce que chaque zone de culture isolée (4) peut être reliée à des dispositifs d'alimentation (19, 20) pour l'amenée de $CO_2$ gazeux pur et d'eau imprégnée de $CO_2$ pur.

10. Serre selon la revendication 9, caractérisée en ce que les zones de culture isolées (4) sont reliées, par groupes ou individuellement, à un système de circulation d'air (17, 18) auquel sont adjoints en série un condenseur refroidi pour la condensation d'humidité et un échangeur de chaleur pour le chauffage de l'air séché.

11. Serre selon l'une des revendications 9 et 10, caractérisée en ce que les zones de culture (4) disposées parallèlement entre elles peuvent se mouvoir relativement en direction transversale à leur direction longitudinale, à une position étroitement rapprochée en un bloc (30).

12. Serre selon la revendication 11, caractérisée en ce qu'à chaque zone de culture (4) est adjoint un dispositif d'ombrage (23) pouvant se rétracter horizontalement ou s'enrouler et pouvant se déployer par-dessus le recouvrement supérieur (10) ou se dérouler, par exemple un store ou une jalousie, d'une largeur qui recouvre la zone de culture (4), et en ce que lorsque les zones de culture (4) sont rapprochées en un bloc (30), les dispositifs d'ombrage (23) forment, en se chevauchant mutuellement, une protection étanche supplémentaire contre la chaleur pour les zones de culture (4).

13. Serre, selon l'une des revendications 11 et 12, caractérisée en ce que chaque zone de culture peut être reliée, par l'intermédiaire de tronçons de tuyau flexibles (19 à 21), à la source de chaleur, à la source de dioxyde de carbone et à la source d'eau imprégnée et à un système de circulation d'air.

*Fig.1*

*Fig. 2*